# EUROPÄISCHE PATENTANMELDUNG

(11) **EP 2 466 086 A1**
(43) Veröffentlichungstag der Anmeldung: **20.06.2012**
(21) Anmeldenummer: 11183819.9
(22) Anmeldetag: 04.10.2011
(51) Int. Cl.: F01N 5/02

(54) **Wärmetauscher**

(30) Priorität: 15.12.2010 DE 102010054640
(71) Anmelder: Benteler Automobiltechnik GmbH, 33102 Paderborn (DE)
(72) Erfinder: Przybylski, Sven, 33104 Paderborn (DE); Andres, Thorsten, 33106 Paderborn (DE)
(74) Vertreter: Griepenstroh, Jörg

(57) **Zusammenfassung**

Die vorliegende Erfindung betrifft einen Wärmetauscher (1) zur Anordnung an einem Kraftfahrzeug, weicher im Kühlkanal (2) einen Heizkanal (3) und ein Wärmerohr (5) aufweist. Erfindungsgemäß ist der Wärmetauscher (1) dadurch gekennzeichnet, dass der Kühlkanal (2) und der Heizkanal (3) thermisch über das Wärmerohr (5) sind, wobei an mindestens einem Wärmerohr (5) ein thermoelektrischer Generator (11) auf der Seite des Kühlkanals (2) ist und der thermoelektrische Generator (11) mit dem Wärmerohr (5) stoffschlüssig ist.

## Beschreibung

Die vorliegende Erfindung betrifft einen Wärmetauscher zur Anordnung an einem Kraftfahrzeug, gemäß den Merkmalen im Oberbegriff von Patentanspruch 1.

Aus dem Stand der Technik sind Abgaswärmerückgewinnungssysteme bekannt. Hierbei werden thermoelektrische Generatoreinheiten in einem Abgasweg eines Verbrennungsmotors angeordnet, um Energie aus der von den Abgasen mitgeführten Abgaswärme zurückzugewinnen.

Bei den aus dem Stand der Technik bekannten Verfahren werden Thermoelemente in einem Abgasdurchlass angeordnet. Durch den Abgasstrom und die Verbindung des Abgasrohres zur Umgebung entsteht eine Temperaturdifferenz. Die thermoelektrischen Elemente wandeln mit Hilfe des Seebeck-Effektes die vorliegende Temperaturdifferenz direkt in elektrische Energie um.

Damit an dem thermoelektrischen Element eine Temperaturdifferenz auftreten kann, verfügt dieses über eine Heißseite und eine Kaltseite. Um einen entsprechenden Temperaturgradienten im Betrieb des thermoelektrischen Elementes halten zu können, ist eine entsprechende Dicke der einzelnen Elemente notwendig. Im Aufbau wird daher meistens eine Dünnschichttechnologie oder eine Folientechnik eingesetzt, die jedoch in einem Abgasstrang, indem hohe Temperaturdifferenzen herrschen, nicht optimal arbeiten kann.

Insbesondere aufgrund der hohen Abgastemperaturen von deutlich über 600° C bis hin zu über 1000° C sind die Baugruppen von thermoelektrischen Elementen extremen Temperaturschwankungen ausgesetzt. Die hochkorrosiven Eigenschaften eines Abgases wirken sich ebenfalls nachteilig auf die Langlebigkeit von thermoelektrischen Elementen aus. Stand der Technik ist es, die thermoelektrischen Elemente direkt in ein abgasführendes Abgasrohr zu verpressen, sodass sie unmittelbar oder mittelbar mit dem Abgas gekoppelt werden. Im Falle der unmittelbaren Koppelung, beispielsweise bekannt aus der EP 147 55 32 A2 ist der thermoelektrische Generator zusätzlich direkt dem Abgas ausgesetzt.

Aufgabe der vorliegenden Erfindung ist es daher, eine Vorrichtung bereitzustellen, bei der das Potential eines thermoelektrischen Generators optimal ausgenutzt wird, die günstig produzierbar ist und eine hohe Lebensdauererwartung aufweist.

Die erfindungsgemäße Aufgabe wird mit einem Wärmetauscher zur Anordnung an einem Kraftfahrzeug mit den Merkmalen im Patentanspruch 1 gelöst.

Vorteilhafte Ausführungsvarianten der vorliegenden Erfindung sind Bestandteil der abhängigen Patentansprüche.

Der erfindungsgemäße Wärmetauscher zur Anordnung an einem Kraftfahrzeug, welcher einen Kühlkanal, einen Heizkanal und Wärmerohre aufweist, ist dadurch gekennzeichnet, dass die Wärmerohre den Kühlkanal mit dem Heizkanal thermisch koppeln, wobei an mindestens einem Wärmerohr ein thermoelektrischer Generator angeordnet ist.

I Rahmen der Erfindung ist ein Wärmerohr selbst ein Wärmeübertrager, das unter Nutzung von Verdampfungswärme eines Stoffes eine hohe Wärmestromdichte erlaubt. Dies bedeutet, dass auf einer kleinen Querschnittsfläche große Mengen von Wärme transportiert werden. Hierbei wird in einer Heizzone eine Verdampfung eines sich in dem Wärmerrohr befindlichen Fluides hergestellt, wobei ein Dampfstrom in eine Kühlzone strömt und hier kondensiert. Durch den entstandenen Dampf wird ein Wärmetransport sichergestellt, wobei der Rückfluss des Kondensats durch Kapillarwirkung in die Heizzone erfolgt, wobei der thermoelektrische Generator stoffschlüssig mit dem Wärmerohr gekoppelt ist. Durch die stoffschlüssige Kopplung des Wärmerohres mit dem thermoelektrischen Generator ist ein optimaler Wärmeübergang von der durch das Wärmerohr transportierten Wärme in den thermoelektrischen Generator sichergestellt. Hierdurch wird eine optimale Wirkungsgradausnutzung sichergestellt.

Durch den erfindungsgemäßen Einsatz des Wärmerohres wird der Kühlkanal von dem Heizkanal thermisch gekoppelt. Dies bedeutet, dass das Wärmerohr mit einem Teil, also zumindest abschnittsweise, in den Heizkanal ragt, wobei ein anderer Teil in den Kühlkanal ragt.

Erfindungsgemäß können durch die Ausführungsvariante mittels Wärmerohr thermoelektrische Materialien als thermoelektrischer Generator eingesetzt werden, die sonst ausschließlich für den Niedertemperaturbereich eingesetzt werden. Die thermoelektrischen Generatoren können über die Wärmerohre auch für ein Hochtemperaturfunktion verwand werden. Durch die Kopplung des Wärmerohres wird sichergestellt, dass der thermoelektrische Generator für den Niedertemperaturbereich auch im Hochtemperaturbereich einen hohen Wirkungsgrad aufweist.

Weiterhin übernimmt das Wärmerohr eine Art Sicherheitsfunktion. So erfolgt der Wärmetransport über das Wärmerohr nur bis zu einer Maximaltemperatur. Es erfolgt also ein in sich begrenztes Betriebsverhalten, sodass die thermoelektrischen Generatoren vor Überhitzung geschützt sind.

Ein weiterer Vorteil des erfindungsgemäßen Aufbaus ist, dass ein direkter Kontakt von thermoelektrischem Generator und Heizkanal bzw. strömendem Abgas in dem Heizkanal thermisch entkoppelt ist. Die thermische Kopplung des thermoelektrischen Generators erfolgt ausschließlich über das Wärmerohr. Spannungsrisse und/oder Undichtigkeiten aufgrund von unterschiedlichen thermischen Ausdehnungen werden damit weitestgehend vermieden, wodurch wiederum die Lebensdauererwartung eines erfindungsgemäß hergestellten Wärmetauschers steigt.

In einer bevorzugten Ausführungsvariante wird als Koppelmittel ein Flüssigmetall eingesetzt. Durch die Nutzung des Flüssigmetalls als Koppelmittel ist es möglich, die Wärme nahezu kräftefrei vom Wärmerohr in das thermoelektrische Element zu übertragen und gleichzeitig einen hohen Wärmeübertragungsfaktor zu nutzen. Etwaig entstehende Wärmeausdehnungen bzw. Spannungen innerhalb der Bauteile aufgrund unterschiedlicher Wärmeausdehnungskoeffizienten werden über die Flüssigmetallkopplung vermieden, ohne auf eine optimale Wärmeübertragungsrate mittels stoffschlüssiger Verbindung zu verzichten.

Als Flüssigmetall wird bevorzugt Galinstan eingesetzt, Vorzugsweise ist das Wärmeleitmittel als Legierung ausgebildet, die die Bestandteile von Gallium und Indium aufweist. Bei Gallium (Ga) und Indium (In) können Verbindungen sowohl mit Edelstahl als auch mit Keramik und zusätzlich auch in sich eingehen. Ein Wärmeleitmittel, dass die zuvor genannten Legierungsbestandteile aufweist, geht in den Grenzzonen der Keramikträgerschicht und der Wärmetauscherwandung Verbindungen ein.

Die so hergestellte stoffschlüssige Verbindung weist einen hohen Wärmeübergang, bei gleichzeitiger geringer Spannungsanfälligkeit auf.

Dabei sorgt Indium für eine geringe Oberflächenspannung und somit ein gutes Benetzungsvermögen für andere Metalle, Glas- oder Keramikmassen. Es verzehrt die Gitter der Legierung und bewirkt dadurch eine Verbesserung der mechanischen Eigenschaften. Indium bildet ein gelbes Haftoxid, das zum Anhaften keramischer Massen an Metallen beiträgt. Hierbei trägt das Oxidationsverhalten wesentlich zum Metallkeramikverbund bei.

Gallium senkt die der Legierung und verbessert somit zusätzlich die Fließfähigkeit und das Formfüllvermögen der Legierung.

In einer weiteren besonders bevorzugten Ausführungsvariante weist die Legierung zusätzlich Zinn (Sn) als Legierungsbestandteil auf. Zinn verringert die Kohlenstoffaufnahme und sorgt dafür, dass die zu verbindenden Stahllegierungen nicht entkohlt werden. Weiterhin fördert Zinn die Haftoxidbildung der Bestandteile Gallium und Indium. Hierdurch wird eine höhere Festigkeit mit den zuvor benannten Legierungsbestandteilen herbeigeführt.

Die Legierung weist bevorzugt einen Anteil von 60 bis 80 % Gallium, 10 bis 30 % Indium und 1 bis 20 % Zinn auf, sowie weitere Bestandteile von anderen Stoffen, z. B. Bismuth oder Antimohn. Die Legierungsbestandteile sind wichtig für die Einstellung einer bestimmten Schmelztemperatur. Die durch die Legierungsbestandteile hergestellten Werkstoffeigenschaften des Wärmeleitmittels müssen ebenfalls unter dem Aspekt der Verarbeitungstemperatur und des Betriebstemperaturbereichs ausgewählt werden, Galinstan und Natrium werden dabei bevorzugt als Wärmeleitmittel eingesetzt.

Vorzugsweise ist weiterhin die Wärmerohrwandung mit einem metallischen Trägersubstat benetzt. Besonders bevorzugt besteht das Trägersubstat aus einer austenitischen Edelstahllegierung.

Besonders bevorzugt wird der thermoelektrische Generator an einer Kaltseite des Wärmerohres angeordnet. Hierdurch erfolgt eine thermische und materielle Trennung von thermoelektrischem Generator und Heizkanal respektiver abgasführendem Kanal. Das Wärmerohr kann durch Wahl des Wärmerohrmaterials bzw. des Fluides innerhalb des Wärmerohres derart ausgelegt werden, dass ein optimaler Wärmeübergang von Abgas an das thermoelektrische Generatorenmodul erfolgt,

Hierbei kann die Auslegung derart erfolgen, dass ein entsprechender Verbrennungsmotor, für den der Wärmetauscher konzipiert wird, mit einem überwiegenden Betriebsbereich in einem Fahrzyklus betrieben wird. Für diesen Betriebsbereich kann das Wärmerohr optimiert ausgelegt werden. Wird der Betriebsbereich überschritten, beispielsweise in hohen Nennlastbereichen, so dient das Wärmerohr als Schutzfunktion, um keine thermische Überlastung des thermoelektrischen Generators zuzulassen. Weiterhin wird durch die Nutzung des Wärmerohres der thermoelektrische Generator optimal mit Wärmeenergie versorgt, sodass ein hoher Wirkungsgrad erreicht wird. Bevorzugt greifen dazu die Wärmerohre mit mehr als der Hälfte ihres in Längsrichtung in den Heizkanal ein und weniger als der Länge in den Kühlkanal. Besonders bevorzugt greifen circa Zweidrittel des Wärmerohres in den Heizkanal und Eindrittel in den Kühlkanal ein.

In einer besonders bevorzugten Ausführungsvariante sind die Wärmerohre im Querschnitt kreisrund, oval, rechteckig und/oder eckig konfiguriert. Hierunter sind insbesondere auch Rundovale- bzw. Flachovalequerschnitte und quer sternförmige oder Ähnliche Querschnittsformen zu verstehen. Je nach Strömungsbedingung und Einsatzgebiet kann somit ein optimales Umströmungsverhalten der Wärmerohre gewählt werden. Beispielsweise ist es nötig einen besonders geringen Gegendruck zu erreichen, sodass im Querschnitt eher runde Konfigurationen gewählt werden oder aber ein turbulentes Strömungsverhalten, sodass im Querschnitt eher eckige Querschnitte gewählt werden.

In einer weiteren bevorzugten Ausführungsvariante sind auf der Heißseite der Wärmerohre Wärmetauscherrippen angeordnet, wobei die Wärmetauscherrippen in Strömungsrichtung des Heizkanals orientiert sind. Durch die Wärmetauscherrippen wird die zum Wärmeübergang zur Verfügung stehende Oberfläche vergrößert. Je nach Orientierung bzw. Ausgestaltung der Wärmetauscherrippen, können diese zusätzlich zur Schaffung einer turbulenten Strömung dienen. Beispielsweise können die Wärmetauscherrippen Abrisskanten oder andere strömungstechnische Elemente aufweisen, die einen Wärmeübergang fördern.

In einer weiteren bevorzugten Ausführungsvariante die Wärmerohre quer zur Strömungsrichtung des Kühlmediums in dem Kühlkanal und/oder des Heizmediums im Heizkanal orientiert angeordnet. Durch die im Wesentlichen quer orientierte Anordnung gegenüber der Strömungsrichtung des Kühlmediums oder des Heizmediums folgt an den Wärmerohren jeweils ein optimierter Wärmeübergang. Der erzeugte Gegendruck bzw. Druckverlust der den Wärmetauscher durchströmenden Kühl- bzw. Heizmedien wird gleichzeitig gering gehalten.

Bevorzugt sind weiterhin die thermoelektrischen Generatoren im Wesentlichen umfangseitig auf dem Wärmerohr angeordnet. Dies im Rahmen der Erfindung, die thermoelektrischen Generatoren die jeweiligen Wärmerohre umfangseitig umfassen. Das findet dabei zumindest abschnittsweise statt. Im Rahmen der Erfindung kann es beispielsweise von Vorteil sein, dass die Wärmetauscherrohre nur auf einem der Strömungsrichtung abgewandten Abschnitt oder aber einem der Strömungsrichtung zugewandten Abschnitt auf dem Wärmerohr angeordnet sind.

Weiterhin wird das Betriebsverhalten des Wärmerohres mit dem des thermoelektrischen Generators aufeinander abgestimmt. Dies bedeutet, dass der thermoelektrische Generator bei bestimmten Temperaturunterschieden ein optimiertes Betriebsverhalten besitzt. In diesem Betriebsverhalten bzw. in diesem Betriebspunkt der thermoelektrische Generator einen optimalen Wirkungsgrad auf. Dieses Wirkungsgradverhalten kann auf des thermoelektrischen Generators mittels eines Widerstandes oder aber in einer vorherigen konzeptionierten Abstimmung erfolgen. Das Wärmetauscherrohr besitzt bevorzugt hierzu ein ebenfalls angepasstes Betriebsverhalten, sodass es stets ein optimiertes Betriebsverhalten des thermoelektrischen Generators unterstützt bzw. sicherstellt.

bevorzugt wird das der Wärmerohre geregelt und/oder gesteuert. Durch den von Ventilen in den Wärmerohren kann eine Regelung und/oder Steuerung sichergestellt werden. Beispielsweise kann auch durch eine Drossel der Wärmetransport innerhalb des Wärmerohres variiert werden. Beispielsweise kann durch ein Druckventil oder aber eine Drossel ein Wärmetransport über die Wärmerohre in hohen Temperaturbereichen von beispielsweise mehr als 500° C, insbesondere mehr als 600° C und besonders bevorzugt mehr als 700° C werden. Eine Überlast aufgrund zu hohen Wärmeeinflusses auf den thermoelektrischen Generator wird somit vermieden.

Weitere Vorteile, , Merkmale, , und Aspekte der vorliegenden Erfindung ergeben sich aus der folgenden Beschreibung, Bevorzugte Ausführungsformen anhand der schematischen Zeichnungen. Die Zeichnungen dienen dem einfachen Verständnis der Erfindung. Es zeigen:
- Figur 1: eine schematische Querschnittsansicht eines erfindungsgemäßen Wärmetauschers mit Wärmerohren,
- Figur 2: eine Querschnittsansicht gemäß Schnittlinie A-A aus Figur 1 und
- Figur 3: eine Ausführungsvariante eines Querschnitts durch einen erfindungsgemäßen Wärmetauscher.

In den Figuren werden für gleiche oder ähnliche Bauteile dieselben verwendet, wobei entsprechende oder vergleichbare Vorteile erreicht werden, auch wenn in wiederholte Beschreibung aus Vereinfachungsgründen entfällt.

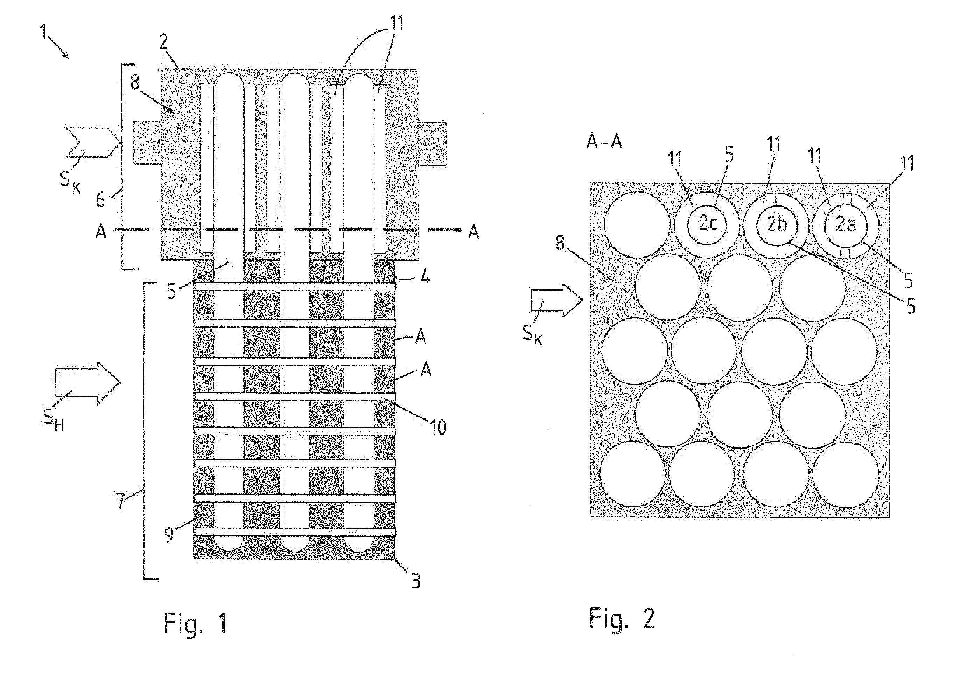

Figur 1 zeigt eine schematische Schnittdarstellung eines erfindungsgemäßen Wärmetauschers 1. Der Wärmetauscher 1 eist dabei einen Kühlkanal 2 und einen Heizkanal 3 auf. Zwischen dem Kühlkanal 2 und Heizkanal 3 ist in Trennschicht 4 angeordnet. Der Kühlkanal 2 und der Heizkanal 3 werden über Wärmerohre 5 miteinander gekoppelt. Eine Strömungsrichtung Sk des Kühlkanals 2 erfolgt dabei parallel in einer Strömungsrichtung Sh des Heizkanals. Der Wärmeübergang erfolgt zum einen an der Trennschicht 4, zum anderen über die Wärmerohre 5 selben. Die Wärmerohre 5 sitzen dabei mit einem Kühlabschnitt 6 innerhalb des Kühlkanals 2 oder mit einem Heizabschnitt 7 innerhalb des Heizkanals 3. Sie werden folglich von einem Kühlmedium 8 seitens des Kühlkanals 2 und von einem Heizmedium 9 auf der Seite des Heizkanals 3 umströmt. Zur Vergrößerung der Oberfläche im Heizabschnitt 7 sind Wärmetauscherrippen 10, die die Wärme grob umgeben, angeordnet. Auf dem Kühlabschnitt 6 sind thermoelektrische Generatoren 11 angeordnet. Die thermoelektrischen Generatoren 11 weisen hier nicht näher dargestellte Anschlussmöglichkeiten zur Abführung der durch die thermoelektrischen Generatoren 11 erzeugten elektrischen auf.

Figur 2 zeigt eine Querschnittsansicht gemäß Schnittlinie A-A aus Figur 1. Hierbei sind exemplarisch drei verschiedene Anordnungsarten von thermoelektrischen Generatoren 11 im Bereich der Kühlabschnitte 6 der Wärmerohre 5 geneigt.

Figur 2 zeigt ein innenliegendes Wärmerohr 5, dass außenseitig bezogen auf die Strömungsrichtung SK des Kühlmediums 8 an der Strömungsrichtung zugewandten und der Strömungsrichtung abgewandten thermoelektrischen Generator 11 aufweist.

Figur 2b zeigt eine Ausführungsvariante, wobei nur auf der strömungszugewandten Seite des Wärmerohres 5 ein thermoelektrischer Generator 11 angeordnet ist und Figur 2c zeigt einen das Wärmerohr 5 vollends umschließenden thermoelektrischen Generator 11

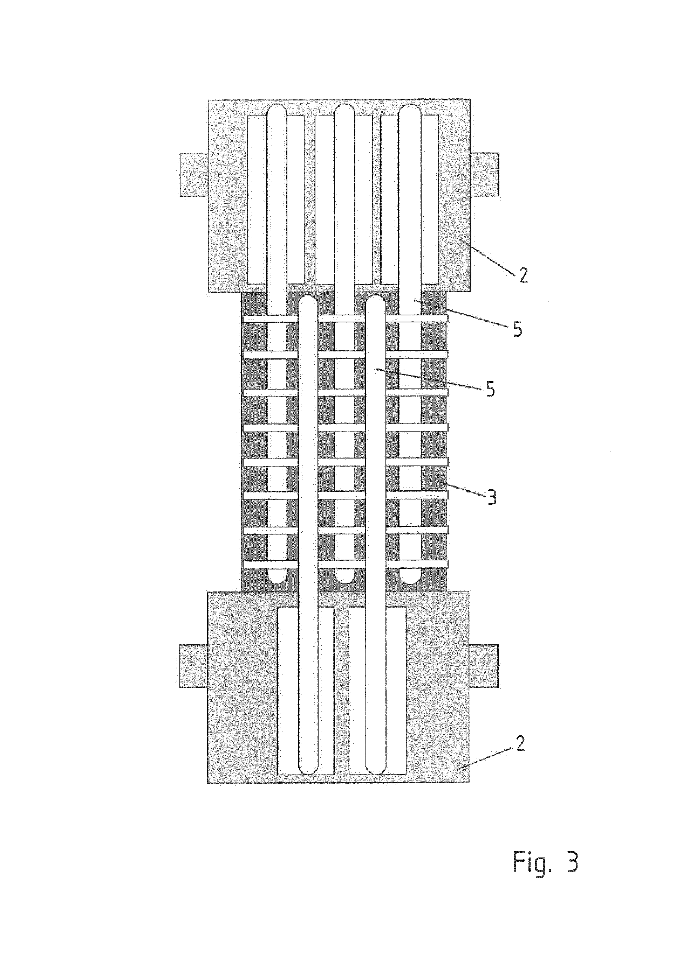

Figur 3 zeigt eine erfindungsgemäße Anordnung, bei der Wärmerohre 5 in einen Heizkanal 3 gegenseitig einsteckbar sind und somit ineinander greifen. Eine Ausführungsvariante gemäß Figur 3 ist platzsparend und kann beispielsweise bei einem Heizkanal 3 in Form eines Abgasrohres oberseitig und unterseitig oder aber auch in Sternform oder in einem Versatz eines Winkels zueinander angeordnet sein.

### Bezugszeichen:

- 1 -: Wärmetauscher
- 2-: Kühlkanal
- 3-: Heizkanal
- 4 -: Trennschicht
- 5 -: Wärmerohr
- 6-: Kühlabschnitt
- 7 -: Heizabschnitt
- 8 -: Kühlmedium
- 9 -: Heizmedium
- 10 -: Wärmetauscherrippe
- 11 -: thermoelektrischer Generator
- A-: Oberfläche
- Sk -: Strömungsrichtung Kühlkanal
- Sh -: Strömungsrichtung Heizkanal

## Patentansprüche

1. Wärmetauscher (1) zur Anordnung an Kraftfahrzeug, welcher einen Kühlkanal (2), einen Heizkanal (3) und Wärmerohre (5) wobei die Wärmerohre (5) den Kühlkanal (2) mit dem Heizkanal (3) thermisch koppeln, wobei an mindestens einem Wärmerohr (5) ein thermoelektrischer Generator (11) angeordnet ist, **dadurch gekennzeichnet, dass** der thermoelektrische Generator (11) stoffschlüssig mit dem Wärmerohr (5) gekoppelt ist.

2. Wärmetauscher nach Anspruch 1, **dadurch gekennzeichnet, dass** ein Flüssigmetall als verwendet wird.

3. Wärmetauscher nach einem der Ansprüche 1 oder 2, **dadurch gekennzeichnet, dass** der thermoelektrische Generator (11) an einer Kaltseite (6) des Wärmerohres (5) angeordnet ist.

4. Wärmetauscher nach einem der Ansprüche 1 bis 3, **dadurch gekennzeichnet, dass** die Wärmerohre (5) im Querschnitt kreisrund, oval, rechteckig und/odereckig konfiguriert sind.

5. Wärmetauscher nach einem der Ansprüche 1 bis 4, **dadurch gekennzeichnet, dass** auf einer Heißseite (7) der Wärmerohre (5) Wärmetauscherrippen (10) angeordnet sind, wobei die Wärmetauscherrippen (10) in Strömungsrichtung des Heizkanals (Sh) orientiert sind.

6. Wärmetauscher nach einem der Ansprüche 1 bis 5, **dadurch gekennzeichnet, dass** die Wärmerohre (5) quer zur Strömungsrichtung (Sk) des Kühlmediums (8) in dem Kühlkanal (2) und/oder der Strömungsrichtung (Sh) des Heizmediums (9) in dem Heizkanal (3) orientiert sind.

7. Wärmetauscher nach einem der Ansprüche 1 bis 6, **dadurch gekennzeichnet, dass** die thermoelektrischen Generatoren (11) im Wesentlichen umfangseitig auf dem Wärmerohr (5) angeordnet sind. .

8. Wärmetauscher nach einem der Ansprüche 1 bis 7, **dadurch gekennzeichnet, dass** das Betriebsverhalten des Wärmerohres (5) mit dem des thermoelektrischen Generators (11) aufeinander abgestimmt ist.

9. Wärmetauscher nach einem der Ansprüche 1 bis 8, **dadurch gekennzeichnet**, das Betriebsverhalten der Wärmerohre (5) regelbar und/oder steuerbar ist.

## Geänderte Patentansprüche

### Geänderte Patentansprüche gemäss Regel 137(2) EPÜ.

**1.** Wärmetauscher (1) zur Anordnung an einem Kraftfahrzeug, welcher einen Kühlkanal (2), einen Heizkanal (3) und Wärmerohre (5) aufweist, wobei die Wärmerohre (5) den Kühlkanal (2) mit dem Heizkanal (3) thermisch koppeln, wobei an mindestens einem Wärmerohr (5) ein thermoelektrischer Generator (11) angeordnet ist, **dadurch gekennzeichnet, dass** der thermoelektrische Generator (11) stoffschlüssig mit dem Wärmerohr (5) gekoppelt ist, und der thermoelektrische Generator (11) bezogen auf eine Strömungsrichtung (Sk) eines Kühlmediums auf dem Wärmerohr (5) auf einer der Strömungsrichtung (Sk) zugewandten oder der Strömungsrichtung (Sk) abgewandten Seite angeordnet ist, wobei die Wärmerohre (5) quer zu der Strömungsrichtung (Sk) angeordnet sind und der thermoelektrische Generator (11) und die Wärmerohre (5) in ihrem Betriebsverhalten aufeinander abgestimmt sind.

**2.** Wärmetauscher nach Anspruch 1, **dadurch gekennzeichnet, dass** ein Flüssigmetall als Koppelmittel verwendet wird.

**3.** Wärmetauscher nach einem der Ansprüche 1 oder 2, **dadurch gekennzeichnet, dass** der thermoelektrische Generator (11) an einer Kaltseite (6) des Wärmerohres (5) angeordnet ist.

**4.** Wärmetauscher nach einem der Ansprüche 1 bis 3, **dadurch gekennzeichnet, dass** die Wärmerohre (5) im Querschnitt kreisrund, oval, rechteckig und/oder eckig konfiguriert sind.

**5.** Wärmetauscher nach einem der Ansprüche 1 bis 4, **dadurch gekennzeichnet, dass** auf einer Heißseite (7) der Wärmerohre (5) Wärmetauscherrippen (10) angeordnet sind, wobei die Wärmetauscherrippen (10) in Strömungsrichtung des Heizkanals (Sh) orientiert sind.

**6.** Wärmetauscher nach einem der Ansprüche 1 bis 5, **dadurch gekennzeichnet, dass** die Wärmerohre (5) quer z zu der Strömungsrichtung (Sh) des Heizmediums (9) in dem Heizkanal (3) orientiert sind.

**7.** Wärmetauscher nach einem der Ansprüche 1 bis 6, **dadurch gekennzeichnet, dass** die thermoelektrischen Generatoren (11) im Wesentlichen umfangseitig auf dem Wärmerohr (5) angeordnet sind.

**8.** Wärmetauscher nach einem der Ansprüche 1 bis 7, **dadurch gekennzeichnet, dass** das Betriebsverhalten der Wärmerohre (5) regelbar und/oder steuerbar ist.
